(19) Europäisches Patentamt
European Patent Office
Office européen des brevets

(11) **EP 4 178 249 A1**

(12) **EUROPEAN PATENT APPLICATION**
published in accordance with Art. 153(4) EPC

(43) Date of publication:
**10.05.2023 Bulletin 2023/19**

(21) Application number: **21832665.0**

(22) Date of filing: **01.07.2021**

(51) International Patent Classification (IPC):
**H04W 24/02** (2009.01)　　**H04W 76/27** (2018.01)

(52) Cooperative Patent Classification (CPC):
**H04W 24/02; H04W 76/27**

(86) International application number:
**PCT/CN2021/104010**

(87) International publication number:
**WO 2022/002202 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.07.2020 CN 202010635844**

(71) Applicant: **Datang Mobile Communications
Equipment Co., Ltd.
Beijing 100085 (CN)**

(72) Inventors:
• **MIAO, Jinhua**
　**Beijing 100085 (CN)**
• **FU, Jing**
　**Beijing 100085 (CN)**
• **LIANG, Jing**
　**Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **DATA TRANSMISSION METHOD, INDICATION METHOD, AND DEVICE**

(57)　A data transmission method, an indication method, and a device are provided. The method includes: receiving configuration information sent by a network side; and performing a data sending and/or a data receiving in an IDLE state and/or an Inactive state, according to the configuration information, in case that the terminal performs a preconfigured uplink data transmission or an early data transmission.

Fig. 3

**Description**

**CROSS REFERENCE OF RELATED APPLICATION**

The present application claims a priority of Chinese patent application No. 202010635844.9 filed on July 3, 2020, which is incorporated herein by reference in its entirety.

**TECHNICAL FIELD**

The embodiments of the present disclosure relate to the field of communication technologies, and in particular, to a data (for example, a small data) transmission method, an indication method, and a device.

**BACKGROUND**

In the related art, when the terminal enters the Preconfigured Uplink Resource (PUR) data transmission or early data transmission (EDT), it is necessary to listen to the physical layer control channel so as to perform the data receiving and sending process.

Different from Long Term Evolution (LTE), except that the control information of the System Information Block (SIB) message is notified through a broadcast message, other control channel information is configured through the radio resource control (RRC) reconfiguration message after the terminal enters the connected state.

However, when the terminal uses PUR or uses EDT (these two processes can be referred to as small data processes for short), since the terminal does not perform the RRC reconfiguration process, the terminal cannot obtain control channel information.

**SUMMARY**

One purpose of the embodiments of the present disclosure is to provide a data transmission method, an indication method, and a device, so as to solve the problem that the terminal cannot obtain control channel information because the terminal does not perform the RRC reconfiguration process when using PUR or EDT.

In a first aspect, an embodiment of the present disclosure provides a data transmission method, applied to a terminal, which includes:

receiving configuration information sent by a network side; and
performing data sending and/or receiving in an IDLE state and/or an Inactive state, according to the configuration information, in case that the terminal performs a preconfigured uplink data transmission or an early data transmission.

Optionally, the configuration information is a RRC release message or an RRC reconfiguration message or a broadcast message.

Optionally, the configuration information comprises: physical downlink control channel configuration information.

Optionally, the physical control channel configuration information is configured to receive scheduling information for scheduling uplink or downlink data of the terminal.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of a frequency domain start position of the physical downlink control channel, a frequency domain length of the physical downlink control channel, and frequency hopping information.

Optionally, the search space information includes one or more of a period of the search space, a position of a start symbol of the physical downlink control channel in a time slot, a downlink control information format, and a control channel element aggregation level.

Optionally, the configuration information includes: HARQ process ID information, the HARQ process ID information includes: a HARQ process number and/or a HARQ process ID;

the method further includes:

calculating or selecting the HARQ process ID, according to the HARQ process ID information.

Optionally, the method further includes:

sending an uplink data, on a configured grant resource, according to the calculated or selected HARQ process ID.

Optionally, the HARQ process ID is carried in the uplink data.

Optionally, the configuration information includes: physical uplink control channel configuration information; the method further includes:

performing uplink feedback of downlink data, according to the physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;

a second time offset elapses after receiving the configuration information, where the second time offset is carried in the configuration information;

a first absolute time elapses after receiving the configuration information, where the first absolute time is carried in the configuration information; and

a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;

a first count value is greater than or equal to a preset value, and the first count value indicates that after the terminal receives the RRC release message, when there is no uplink data sent by a configured grant resource, the first count value is increased by one;

timing advance is out-of-sync;

a channel quality of a synchronization signal block resource is lower than a first threshold value; and

a channel quality of a serving cell is lower than a second threshold value.

Optionally, the configuration information includes: information of the first timer.

Optionally, the method further includes:

notifying a loss of upper data, or performing data retransmission, in case that the first timer expires.

In a second aspect, an embodiment of the present disclosure provides a data transmission method, applied to a terminal, which includes:

determining to perform preconfigured uplink UL resource data transmission PUR or early data transmission EDT;

performing data sending and/or receiving in an IDLE state and/or an Inactive state, according to a configuration information,

where the configuration information is obtained by the terminal in a connected state from a network side.

Optionally, the configuration information includes: physical downlink control channel configuration information.

Optionally, the physical downlink control channel configuration information includes one or more of:

time domain information;

frequency domain information;

control resource set information; and

search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the configuration information includes: Hybrid Automatic Repeat Request (HARQ) process identification (ID) information, the HARQ process ID information includes: a HARQ process number and/or a HARQ process ID; prior to the performing data sending and/or receiving in the IDLE state and/or the Inactive state, the method further includes:

calculating or selecting the HARQ process ID, according to the HARQ process ID information.

Optionally, the method further includes:

sending an uplink data, on a configured grant resource, according to the calculated or selected HARQ process ID.

Optionally, the method further includes:

performing uplink feedback of downlink data, according to the physical uplink control channel configuration information.

Optionally, the physical uplink control channel configuration information further includes: a first time offset; the method further includes:

performing by the terminal, after receiving the physical downlink control channel or a physical downlink shared channel, feedback on the physical uplink control channel after the first time offset elapses.

In a third aspect, an embodiment of the present disclosure provides an indication method, applied to a network side device, which includes:

sending configuration information to a terminal, where the configuration information is configured to enable the terminal to perform data sending and/or receiving in an IDLE state and/or an Inactive state, in case that the terminal performs a preconfigured uplink data transmission or an early data transmission.

Optionally, the configuration information is an RRC release message or an RRC reconfiguration message or a broadcast message.

Optionally, the configuration information includes: physical downlink control channel configuration information.

Optionally, the physical control channel configuration information is configured to receive scheduling information for scheduling uplink or downlink data of the terminal.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the search space information includes one or more of: a period of the search space, a position of a start symbol of the physical downlink control channel in a time slot, a downlink control information format, and a control channel element aggregation level.

Optionally, the configuration information includes: HARQ process ID information, the HARQ process ID information includes: a HARQ process number and/or a HARQ process ID resource pool, where the HARQ process ID resource pool includes a HARQ process ID.

Optionally, the configuration information includes: physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;

a first count value is greater than or equal to a preset value, and the first count value indicates that after the terminal receives the RRC release message, when there is no uplink data sent by a configured grant resource, the first count value is increased by one;

timing advance is out-of-sync;

a channel quality of a synchronization signal block resource is lower than a first threshold value; and

a channel quality of a serving cell is lower than a second threshold value.

Optionally, the configuration information includes: information of the first timer.

In a fourth aspect, an embodiment of the present disclosure provides a data transmission apparatus, applied to a terminal, which includes:

a first receiving module, configured to receive configuration information sent by a network side;

the first processing module, configured to perform data sending and/or receiving in an IDLE state and/or an Inactive state, according to the configuration information, in case that the terminal performs a preconfigured uplink data transmission or an early data transmission.

Optionally, the configuration information is an RRC release message or an RRC reconfiguration message or a broadcast message.

Optionally, the configuration information includes: physical downlink control channel configuration information.

Optionally, the configuration information includes: HARQ process ID information, the HARQ process ID information includes: a HARQ process number and/or a HARQ process ID resource pool, where the HARQ process ID resource pool includes the HARQ process ID;

the apparatus further includes:

a second processing module is configured to calculate or select the HARQ process ID, according to the HARQ process ID information.

Optionally, the apparatus further includes:

a third processing module is configured to send uplink data, on the configured grant resource, according to the calculated or selected HARQ process ID.

Optionally, the configuration information includes: physical uplink control channel configuration information;

the apparatus further includes:

a fourth processing module is configured to perform uplink feedback of downlink data, according to the physical uplink control channel configuration information.

In a fifth aspect, an embodiment of the present disclosure provides a terminal, which includes: a first transceiver, a first processor, and a first memory;

the first transceiver sends and receives data under a control of the first processor;

the first processor is configured to read program in the first memory to perform: receiving the configuration information sent by a network side; and performing data sending and/or receiving in an IDLE state and/or an Inactive state, according to the configuration information, in case that the terminal performs a preconfigured uplink data transmission or an early data transmission.

Optionally, the first processor is configured to read program in the first memory to perform: the terminal is in a connected state, or the terminal is in a RRC IDLE state, or the terminal receives configuration information sent by the network side in an Inactive state.

Optionally, the configuration information is an RRC release message or an RRC reconfiguration message or a broadcast message.

Optionally, the configuration information includes: physical downlink control channel configuration information.

Optionally, the physical control channel configuration information is configured to receive scheduling information for scheduling uplink or downlink data of the terminal.

Optionally, the physical downlink control channel configuration information includes one or more of:

time domain information;

frequency domain information;

control resource set information; and

search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the search space information includes one or more of: a period of the search space, a position of a start symbol of the physical downlink control channel in a time slot, a downlink control information format, and a control channel element aggregation level.

Optionally, the configuration information includes: HARQ process ID information, the HARQ process ID information includes: a HARQ process number and/or a HARQ process ID resource pool, where the HARQ process ID resource pool includes the HARQ process ID;

the first processor is configured to read program in the first memory to perform: calculating or selecting the HARQ process ID, according to the HARQ process ID information.

Optionally, the first processor is configured to read program in the memory to perform: sending an uplink data, on a configured grant resource, according to the calculated or selected HARQ process ID.

Optionally, the HARQ process ID is carried in the uplink data.

Optionally, the RRC release message or the RRC reconfiguration message further includes: physical uplink control channel configuration information;

Optionally, the first processor is configured to read program in the first memory to perform: performing uplink feedback of downlink data, according to the physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;
a channel quality of a synchronization signal block resource is lower than a first threshold value; and
a channel quality of a serving cell is lower than a second threshold value.

Optionally, the configuration information further includes: information of the first timer.

Optionally, the first processor is configured to read program in the first memory to perform: notifying a loss of upper data, or performing data retransmission, in case that the first timer expires.

In a sixth aspect, an embodiment of the present disclosure provides a data transmission apparatus, applied to a terminal, and the data transmission apparatus includes:

a determining module, configured to determine to perform preconfigured uplink UL resource data transmission PUR or early data transmission EDT;
a first executing module, configured to perform data sending and/or receiving in an IDLE state and/or an Inactive state, according to the configuration information,
where the configuration information is obtained by the terminal from the network side in a connected state.

Optionally, the configuration information includes: physical downlink control channel configuration information.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the configuration information includes: Hybrid Automatic Repeat Request (HARQ) process identification (ID) information, the HARQ process ID information includes: a HARQ process number and/or a HARQ process ID; the data transmission apparatus further includes:
a second executing module, configured to calculate or select the HARQ process ID, according to the HARQ process ID information.

Optionally, the data transmission apparatus further includes:
a sending module, configured to send an uplink data, on a configured grant resource, according to the calculated or selected HARQ process ID.

Optionally, the data transmission apparatus further includes:
a third executing module, configured to perform uplink feedback of downlink data, according to the physical uplink control channel configuration information.

Optionally, the physical uplink control channel configuration information further includes: a first time offset; the data transmission apparatus further includes:
a feedback module, configured to perform by the terminal, after receiving the physical downlink control channel or a physical downlink shared channel, feedback on the physical uplink control channel after the first time offset elapses.

In a seventh aspect, an embodiment of the present disclosure provides a terminal, where the terminal includes:
a third transceiver, a third processor, and a third memory;

the third transceiver sends and receives data under a control of the third processor;
the third processor is configured to read program in the third memory to perform: determining to perform preconfigured uplink UL resource data transmission PUR or early data transmission EDT;
performing data sending and/or receiving in an IDLE state and/or an Inactive state, according to the configuration information,
where the configuration information is obtained by the terminal in a connected state from a network side.

Optionally, the configuration information includes: physical downlink control channel configuration information.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the configuration information includes: Hybrid Automatic Repeat Request (HARQ) process identification (ID) information, the HARQ process ID information includes: a HARQ process number and/or a HARQ process ID;

the third processor is configured to read program in the third memory to further perform:
calculating or selecting the HARQ process ID, according to the HARQ process ID information.

Optionally, the third processor is configured to read program in the third memory to further perform:
sending an uplink data, on a configured grant resource, according to the calculated or selected HARQ process ID.

Optionally, the third processor is configured to read program in the third memory to further perform:
performing uplink feedback of downlink data, according to the physical uplink control channel configuration information.

Optionally, the physical uplink control channel configuration information further includes: a first time offset;

the third processor is configured to read program in the third memory to further perform:
performing, after receiving the physical downlink control channel or a physical downlink shared channel, feedback on the physical uplink control channel after the first time offset elapses.

In an eighth aspect, an embodiment of the present disclosure provides an indication apparatus, applied to a network side device, which includes:
a first sending module, configured to send configuration information to a terminal, where the configuration information is configured to enable the terminal to perform data sending and/or receiving in an IDLE state and/or an Inactive state, in case that the terminal performs a preconfigured uplink data transmission or an early data transmission.

Optionally, the configuration information is a RRC release message or an RRC reconfiguration message or a broadcast message.

Optionally, the configuration information includes: physical downlink control channel configuration information.

Optionally, the physical control channel configuration information is configured to receive scheduling information for scheduling uplink or downlink data of the terminal.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the search space information includes one or more of: a period of the search space, a position of a start symbol of the physical downlink control channel in a time slot, a downlink control information format, and a control channel element aggregation level.

Optionally, the configuration information includes: HARQ process ID information, the HARQ process ID information includes: a HARQ process number and/or a HARQ process ID resource pool, where the HARQ process ID resource pool includes the HARQ process ID.

Optionally, the configuration information includes: physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;
a channel quality of a synchronization signal block resource is lower than a first threshold value; and

a channel quality of a serving cell is lower than a second threshold value.

Optionally, the configuration information further includes: information of the first timer.

In a ninth aspect, an embodiment of the present disclosure provides a network side device, which includes: a second transceiver, a second processor, and a second memory;

the second transceiver sends and receives data under a control of the second processor;
the second processor is configured to read program in the second memory to perform: sending configuration information to a terminal, where the configuration information is configured to enable the terminal to perform data sending and/or receiving in an IDLE state and/or an Inactive state, in case that the terminal performs a preconfigured uplink data transmission or an early data transmission.

Optionally, the configuration information is a RRC release message or an RRC reconfiguration message or a broadcast message.

Optionally, the configuration information includes: physical downlink control channel configuration information.

Optionally, the physical control channel configuration information is configured to receive scheduling information for scheduling uplink or downlink data of the terminal.

Optionally, the physical downlink control channel configuration information includes one or more of:

time domain information;
frequency domain information;
control resource set information; and
search space information.

Optionally, the time domain information includes a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the search space information includes one or more of: a period of the search space, a position of a start symbol of the physical downlink control channel in a time slot, a downlink control information format, and a control channel element aggregation level.

Optionally, the configuration information includes: HARQ process ID information, the HARQ process ID information includes: a HARQ process number and/or a HARQ process ID resource pool, where the HARQ process ID resource pool includes the HARQ process ID.

Optionally, the configuration information includes: physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;

a channel quality of a synchronization signal block resource is lower than a first threshold value; and
a channel quality of a serving cell is lower than a second threshold value.

Optionally, the configuration information further includes: information of the first timer.

In a tenth aspect, an embodiment of the present disclosure provides a readable storage medium, where a program is stored in the readable storage medium, and when the program is executed by a processor, the steps including the method described above are implemented.

In the embodiment of the present disclosure, the terminal may receive configuration information sent by the network side; then, the terminal may perform data sending and/or receiving in an IDLE state and/or an Inactive state, according to the configuration information, in case that the terminal performs a preconfigured uplink data transmission or an early data transmission.

## BRIEF DESCRIPTION OF THE DRAWINGS

Various other advantages and benefits will become apparent to those ordinarily skilled in the art upon reading the following detailed description of optional embodiments. The drawings are for the purpose of illustrating optional embodiments only and are not considered as limiting of the present disclosure. Also, the same components are denoted by using the same reference numerals throughout the drawings. In the drawing:

FIG. 1 is a schematic view of an EDT data transmission process in a related art;
FIG. 2 is a schematic view of a preconfigured resource process;
FIG. 3 is a flowchart of a data transmission method according to an embodiment of the present disclosure;
FIG. 4 is a flowchart of an indication method according to an embodiment of the present disclosure;
FIG. 5 is a flowchart of Embodiment 1 according to an embodiment of the present disclosure;
FIG. 6 is a flowchart of Embodiment 2 according to an embodiment of the present disclosure;
FIG. 7 is a flowchart of Embodiment 3 according to an embodiment of the present disclosure;
FIG. 8 is a flowchart of Embodiment 4 according to an embodiment of the present disclosure;
FIG. 9 is a schematic view of a data transmission apparatus according to an embodiment of the present disclosure;
FIG. 10 is a schematic view of a terminal according to an embodiment of the present disclosure;
FIG. 11 is a schematic view of an indication apparatus according to an embodiment of the present disclosure;
FIG. 12 is a schematic view of a network side device according to an embodiment of the present disclosure;
FIG. 13 is a schematic view of a data transmission apparatus according to an embodiment of the present disclosure; and
FIG. 14 is a schematic view of the terminal according to an embodiment of the present disclosure.

## DETAILED DESCRIPTION

1) Early Data Transmission (EDT) data transmission process:

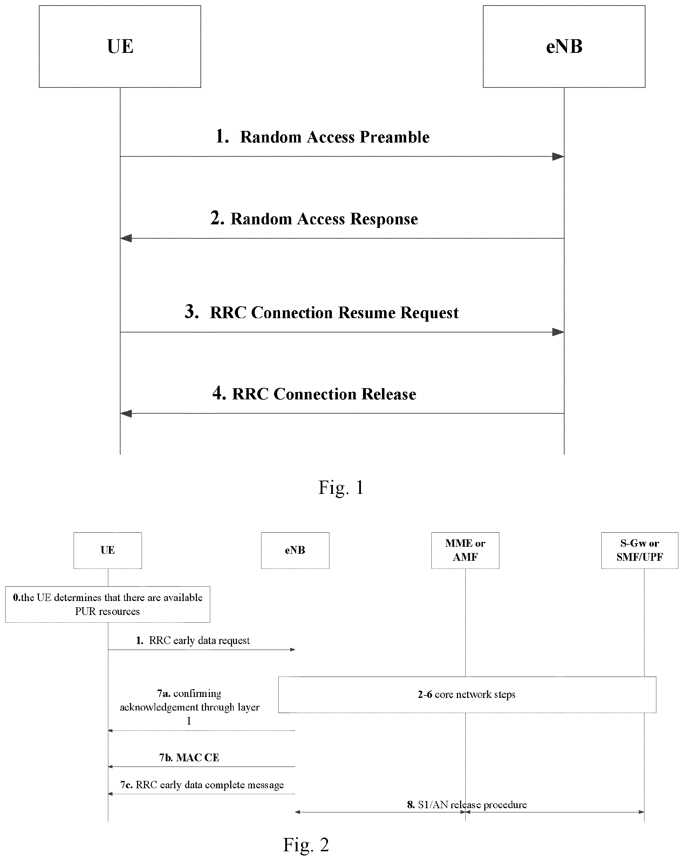

As shown in FIG. 1, in the EDT data transmission process in the related art, the steps are as follows:

Step 1: UE sends a random access preamble;
Step 2: the UE receives a random access response (RAR), where the RAR includes an uplink (UL) grant;
Step 3: the UE sends an RRC connection resume request message, and carries the UL data in the UL grant sent by the RAR;
Step 4: the UE receives the RRC connection release message and the message continues to maintain the RRC inactive state.

2) preconfigured uplink resource (PUR) process:

Referring to FIG. 2, the specific steps are as follows:

Step 0: the UE determines that there are available PUR resources, for example, the serving cell supports PUR, the time advance (TA) is valid, and so on.
Step 1: the UE uses PUR resources to send UL data, such as an RRC early data request.
Steps 2-6 are core network steps. For example, MO-EDT procedure for control plane Clot EPS/5GS optimisation (MO-EDT procedure for control plane Clot EPS/5GS optimisation).
Step 7a: if the network side learns that there is no buffered downlink (Down Link, DL) data or signaling, the network side confirms acknowledgement (L1 ACK) signaling notifying the UE through layer 1, optionally, a TA command (e.g., Time Advance Adjustment) may be included in the L1 ACK.

Step 7b: if the network side learns that the UE has no subsequent data or signaling, the network side will send feedback to the UE through a Media Access Control Element (MAC CE), optionally, a TA command may be included.

Step 7c: if there is no subsequent data, including buffered or estimated data, the network side sends RRC signaling to the UE, such as an RRC early data complete (RRC Early Data Complete) message.

Step 8: S1/AN release procedure.

The technical solutions in the embodiments of the present disclosure will be clearly and completely described below with reference to the drawings in the embodiments of the present disclosure, obviously, the described embodiments are part of the embodiments of the present disclosure, but not all of the embodiments. Based on the embodiments in the present disclosure, all other embodiments obtained by those ordinarily skilled in the art without making creative efforts shall fall within the protection scope of the present disclosure.

The term "including" and any variations thereof in the specification and claims of the present disclosure are intended to cover non-exclusive inclusion, for example, a process, method, system, product or device including a series of steps or units are not necessarily limited to those steps or units explicitly listed, but may include other steps or units not expressly listed or inherent to the process, method, product or device. In addition, the use of "and/or" in the specification and the claims indicates at least one of the connected objects, such as A and/or B, indicating that there are three cases including A alone, B alone, and both A and B.

In the embodiments of the present disclosure, words such as "exemplary" or "such as" are used to represent an example, example illustration, or description. Any embodiments or design scheme described in the embodiments of the present disclosure as "exemplary" or "such as" should not be construed as more preferred or advantageous than other embodiments or design scheme. Rather, the use of words such as "exemplary" or "such as" is intended to present the related concepts in a specific manner.

The techniques described herein are not limited to Long Time Evolution (LTE)/LTE-Advanced (LTE-A) systems, and may also be used in various wireless communication systems such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA) and other systems.

The terms "system" and "network" are often used interchangeably. A CDMA system may achieve radio technology such as CDMA2000, Universal Terrestrial Radio Access (UTRA). UTRA includes Wideband Code Division Multiple Access (WCDMA) and other CDMA variants. A TDMA system may achieve a radio technology such as the Global System for Mobile Communication (GSM). OFDMA system can achieve a radio technology such as Ultra Mobile Broadband (UMB), Evolution-UTRA (E-UTRA), IEEE 802.11 (Wi-Fi), IEEE 802.16 (WiMAX), IEEE 802.20, and Flash-OFDM. UTRA and E-UTRA are part of the Universal Mobile Telecommunications System (UMTS). LTE and LTE-Advanced such as LTE-A are new UMTS releases that use E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for both the systems and radio technologies mentioned above, as well as for other systems and radio technologies.

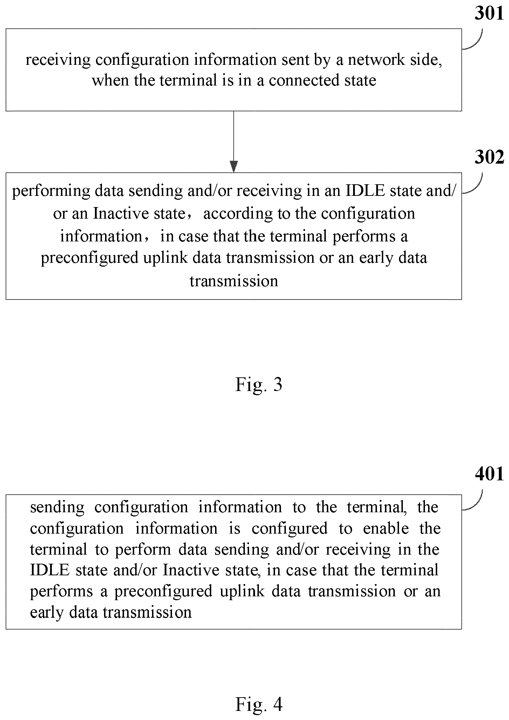

Referring to FIG. 3, embodiments of the present disclosure provide a data transmission method. The executive body of the method may be a terminal. The specific steps include: step 301 and step 302.

Step 301: receiving configuration information sent by a network side;

For example, the terminal is in a connected state, or the terminal is in a radio resource control (RRC) idle (IDLE) state, or the terminal is in an inactive state to receive the configuration information sent by the network side.

Step 302: performing data sending and/or receiving in an IDLE state and/or an Inactive state, according to the configuration information, in case that the terminal performs a preconfigured uplink data transmission or an early data transmission.

Optionally, the configuration information is a RRC release message or an RRC reconfiguration message or a broadcast message.

In some embodiments, the configuration information may include: physical downlink control channel configuration information.

Optionally, the physical downlink control channel configuration information is configured to receive scheduling information for scheduling uplink or downlink data of the terminal.

In some embodiments, the physical downlink control channel configuration information includes one or more of: (1) time domain information, for example, the time domain information includes: a symbol length occupied by the physical downlink control channel; (2) frequency domain information , the frequency domain information includes one or more of: (2.1) a frequency domain start position of the physical downlink control channel, (2.2) a frequency domain length of the physical downlink control channel, and (2.3) frequency hopping information; (3) control resource set information; (4) search space information, for example, the search space information includes one or more of: (4.1) a period of the search space, (4.2) a position of a start symbol of the physical downlink control channel in a time slot, (4.3) a downlink control information format, and (4.4) a control channel element aggregation level.

In other embodiments, the configuration information includes: Hybrid Automatic Repeat Request (HARQ) process identification (ID) information, optionally, the HARQ process ID information may include: a HARQ process number and a HARQ process ID resource pool, the HARQ process ID resource pool includes the HARQ process ID; Correspondingly, based on the method shown in FIG. 3, the method may also include: calculating or selecting the HARQ process ID according to the HARQ process ID information.

Optionally, based on the method shown in FIG. 3, the method may further include: sending uplink data, on a configured grant resource, according to the calculated or selected HARQ process ID.

Further, the HARQ process ID is carried in the uplink data.

In other embodiments, the configuration information includes: physical uplink control channel configuration information; further, on the basis of the method shown in FIG. 3, the method may further include: performing uplink feedback of downlink data, according to the physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel. For example, the first time offset is a time slot or a time absolute value.

In an embodiment of the present disclosure, an effective time condition of the configuration information may include one or more of:

(1) the terminal enters the IDLE state or Inactive state;
(2) a second time offset elapses after receiving the configuration information, where the second time offset is carried in the configuration information;
(3) a first absolute time elapses after receiving the configuration information, where the first absolute time is carried in the configuration information; and
(4) a third time offset and a second absolute time elapse after receiving the configuration information, where the second absolute time and the third time offset are carried in the configuration information.

In an embodiment of the present disclosure, an expiration time condition of the configuration information includes one or more of:

(1) a first timer expires, where the first timer is started after the terminal receives the configuration information, and when the first timer is started, the terminal listens to the physical downlink control channel to obtain retransmission scheduling of configured grant by the network side; further, the terminal notifies a loss of upper data, or performs data retransmission, in case that the first timer expires.
(2) a first count value is greater than or equal to a preset value, and the first count value indicates that after the terminal receives the RRC release message, when there is no uplink data sent by a configured grant resource, the first count value is increased by one;
It can be understood that the preset value is not specifically limited.
(3) timing advance is out-of-sync;
(4) a channel quality of a synchronization signal block resource is lower than a first threshold value; and
(5) a channel quality of a serving cell is lower than a second threshold value.

It can be understood that the first threshold value and the second threshold value are not specifically limited.

In other embodiments, the configuration information includes: information of the first timer.

In an embodiment of the present disclosure, the terminal may receive configuration information sent by the network side; then, the terminal may perform data sending and/or receiving in an IDLE state and/or an Inactive state, according to the configuration information, in case that the terminal performs a preconfigured uplink data transmission or an early data transmission, thereby improving the reliability of data sending/receiving in the communication system.

Referring to FIG. 4, an embodiment of the present disclosure provides an indication method. The executive body of the method may be a network side device. The specific steps include: step 401.

Step 401: sending configuration information to the terminal, the configuration information is configured to enable the terminal to perform data sending and/or receiving in the IDLE state (or RRC IDLE state) and/or Inactive state, in case that the terminal performs a preconfigured uplink data transmission or an early data transmission.

For example, the configuration information is sent to the terminal in the connected state or the RRC IDLE state or the INACTIVE state.

In some embodiments, the configuration information is an RRC release message or an RRC reconfiguration message or a broadcast message.

Optionally, the physical downlink control channel configuration information is configured to receive scheduling information for scheduling UL/DL data of the UE.

In some embodiments, the physical downlink control channel configuration information includes one or more of: (1) time domain information, for example, the time domain information includes: the symbol length occupied by the physical downlink control channel; (2) frequency domain information, the frequency domain information includes one or more of: (2.1) a frequency domain start position of the physical downlink control channel, (2.2) a frequency domain length of the physical downlink control channel, and (2.3) frequency hopping information; (3) control resource set information; and (4) search space information, for example, the search space information includes one or more of: (4.1) a period of the search space, (4.2) a position of a start symbol of the physical downlink control channel in a time slot, (4.3) a downlink control information format, and (4.4) a control channel element aggregation level.

In other embodiments, the configuration information includes: HARQ process ID information, optionally, the HARQ process ID information may include: a HARQ process number and/or a HARQ process ID resource pool, where the HARQ process ID resource pool includes the HARQ process ID.

Further, the HARQ process ID is carried in the uplink data.

In other embodiments, the configuration information includes: physical uplink control channel configuration information.

Optionally, the physical uplink control channel configuration information includes: a first time offset, after the terminal receives the physical downlink control channel or the physical downlink shared channel, the terminal performs feedback on the physical uplink control channel after the first time offset elapses. For example, the first time offset is a time slot or a time absolute value.

In an embodiment of the present disclosure, an effective time condition of the configuration information may include one or more of:

(1) the terminal enters the IDLE state or Inactive state;
(2) a second time offset elapses after receiving the configuration information, where the second time offset is carried in the configuration information;
(3) a first absolute time elapses after receiving the configuration information, where the first absolute time is carried in the configuration information; and
(4) a third time offset and a second absolute time elapse after receiving the configuration information, where the second absolute time and the third time offset are carried in the configuration information.

In an embodiment of the present disclosure, an expiration time condition of the configuration information includes one or more of:

(1) a first timer expires, where the first timer is started after the terminal receives the configuration information, and when the first timer is started, the terminal listens to the physical downlink control channel to obtain retransmission scheduling of configured grant by the network side; further, the terminal notifies a loss of upper data, or performs data retransmission, in case that the first timer expires.
(2) a first count value is greater than or equal to a preset value, and the first count value indicates that after the terminal receives the RRC release message, when there is no uplink data sent by a configured grant resource, the first count value is increased by one;
(3) timing advance is out-of-sync;
(4) a channel quality of a synchronization signal block resource is lower than a first threshold value; and
(5) a channel quality of a serving cell is lower than a second threshold value.

In other embodiments, the configuration information further includes: information of the first timer.

In an embodiment of the present disclosure, the terminal may receive configuration information sent by the network side; then, the terminal may perform data sending and/or receiving in an IDLE state and/or an Inactive state, according to the configuration information, in case that the terminal performs a preconfigured uplink data transmission or an early data transmission, thereby improving the reliability of data sending/receiving in the communication system.

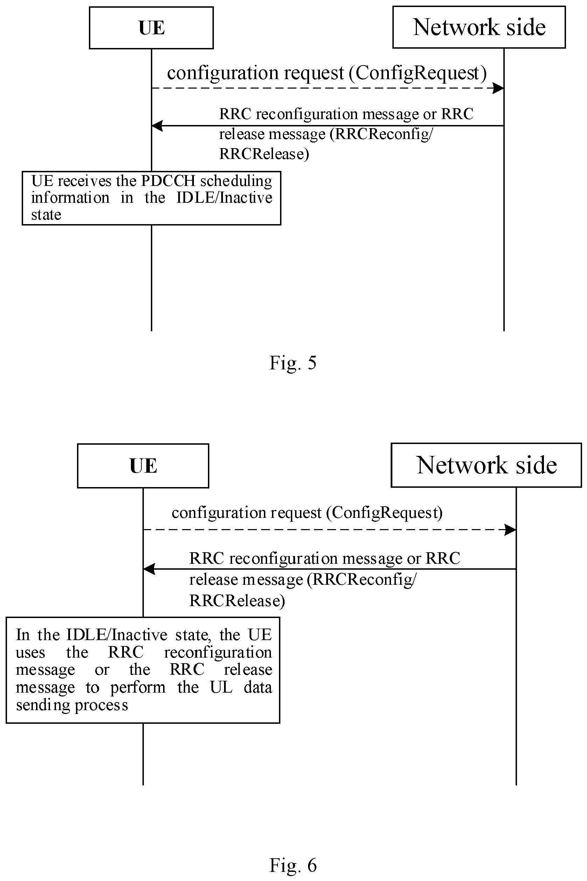

Embodiment 1: the network side configures physical downlink control channel (Physical Downlink Control Channel, PDCCH) information through configuration information, and the terminal receives PDCCH scheduling information through PDCCH information in an idle (IDLE) state and/or an Inactive state, see FIG. 5.

Step 1: receiving the RRC release message, or the RRC reconfiguration message;

For example, the UE receives the PDCCH configuration information (PDCCHConfig) configured by the network side through the configuration information.

Optionally, the configuration information may be an RRC release message, or an RRC reconfiguration (RRCReconfiguration) message;

Optionally, before step 1, a configuration request is sent, for example, the UE sends a request message (for example, PURrequest) to request the network side to send configuration information;

Optionally, the PDCCH configuration information may include: control resource set (CORESET) information, and search space (Search space) information.

The CORESET information may include time frequency resource information of the dedicated PDCCH channel, such as the PDCCH time domain length and/or frequency domain position. The frequency domain information may include one or more of: a PDCCH frequency domain start position, a PDCCH frequency domain length, and/or PDCCH frequency hopping information, etc. The time domain information may include: a symbol length occupied by the PDCCH.

The Search Space information may include one or more of: a period of the Search Space, a position of the PDCCH start symbol in a time slot, a downlink control information (Downlink Control Information, DCI) format, and a control channel element (Control Channel Element, CCE) aggregation level and other information.

Step 2: The UE receives the PDCCH scheduling information in the IDLE/Inactive state.

For example, the UE triggers data transmission in the IDLE/Inactive state.

Optionally, the data transmission process may be a UL data sending process, including an EDT process, a configured grant process or a manner of PUR, which is not limited here.

Method 1: EDT process.

(1) UE sends preamble;

(2) The UE uses the common search space to receive the RAR, and the PDCCH information used by the UE at this time is notified by a broadcast message.

(3) The UE sends message 3 (Msg3) on the uplink grant (UL grant) sent by the RAR.

Optionally, the Msg3 carries a first UL indication, and the first UL indication is configured to indicate that the UE has uplink data;

(4) The network side uses the PDCCH configuration information to send the second UL scheduling information and/or the first DL scheduling information, and/or the retransmission scheduling of the second UL scheduling information, and/or the retransmission scheduling of the first DL scheduling information to the UE;

The UE uses the PDCCH configuration information to receive the second UL scheduling information sent by the network side;

(5) The UE sends UL data on the second UL scheduling information;

It can be understood that the first UL and the second UL may be the same UL, or different ULs.

Specifically, the UE can obtain the PDCCH frequency domain position information and duration information according to the frequency domain position configured by CORESET, and judge the PDCCH duration, period, start position of symbols in the time slot, aggregation level and other information according to the search space information.

Specifically, the UE may select the corresponding PDCCH information according to the data transmission process, and when the UE performs UL/DL data transmission scheduling, the UE selects the PDCCH information in the RRC release message to receive/send data.

Method 2: configured grant process.

(1) In the Inactive/IDLE state, when the UE meets the following conditions, the process of sending data on the configured grant is triggered:

A. UL data is less than the first threshold;
B. UE maintains UL synchronization;
C. configured grant UL resource is valid;
D. current serving cell supports configured grant data transmission.

(2) The UE sends data on the configured grant resource. The UE uses the PDCCH configuration information to listen to the scheduling information sent by the network side. The scheduling information may be UL retransmission scheduling or new transmission/retransmission scheduling of DL data.

Embodiment 2: the network side configures the Hybrid Automatic Repeat reQuest (HARQ) process ID information of the preconfigured resource. The UE is in the IDLE state or the Inactive state and uses the HARQ process ID information to perform the UL data sending process, see FIG. 6.

Step 1: receiving the RRC release message, or the RRC reconfiguration message;

For example, the UE receives configuration information (RRCReconfiguration/RRCRelease (for example, including HARQ process ID information (HARQ info))) of network side.

Optionally, the configuration information may include one or more of:

- configured grant resource available to UE in the IDLE/Inactive state;
- HARQ process ID information.

Optionally, the HARQ process ID information may be the HARQ process number (HARQ_Process_number) that can be used by the configured grant resource in the Inactive state, or may also be the HARQ process resource pool that the UE uses configured grant resource in the Inactive state, for example, the HARQ process resource pool includes a HARQ process ID.

Optionally, the HARQ process ID information may be sent through an RRC release message or a broadcast message.

Optionally, before step 1, a configuration request is sent, for example, the UE sends a request message to request the network side to send configuration information;

Step 2: In the IDLE/Inactive state, the UE uses the RRC reconfiguration message or the RRC release message to perform the UL data sending process;

For example, step 21: when the UE is in the IDLE/Inactive state, the UE has UL data transmission, after at least the following conditions are met, the UE can perform the process of sending data on the configured grant:

A. UL data is less than the first threshold;
B. UE maintains UL synchronization.

Step 22: UE determines HARQ process ID information;

After the UE selects the sending data on the configured grant, the HARQ process ID may be determined by the following formula:

$$\text{HARQ process ID} = (\text{Current\_Time}/\text{CG\_interval}) \text{ module HARQ\_Process\_number,}$$

which is configured to calculate the HARQ process ID information of the resource of PUR/Configured Grant (CG).

HARQ_Process_number is configured by step 1.

Current_Time is a starting time of sending data on the configured grant resource used by the UE, and the time unit may be a time slot or a symbol. There are no restrictions here. CG_interval is a period of the configured grant resource.

Optionally, the UE may also select HARQ process ID information in the HARQ process resource pool, for example, the HARQ process ID information configured in the resource pool is 1, 2 or 5. Then the UE can select any one of 1, 2 and 5 in the sending data.

Optionally, the current time is obtained by calculation according to the time of the received release message notified by the network side, the offset notified in the release message, and the period of N*PUR.

CG_interval is the period of the PUR resource.

Optionally, the HARQ process ID information is carried in the UL data packet.

Step 23: The UE sends UL data, on the configured grant resource, according to the selected HARQ process ID information.

That is, the UE uses the selected HARQ process ID information to perform the UL data sending process in the IDLE state or the Inactive state.

Optionally, the HARQ process ID information of the UE is carried in the UL data, and is sent to the network side.

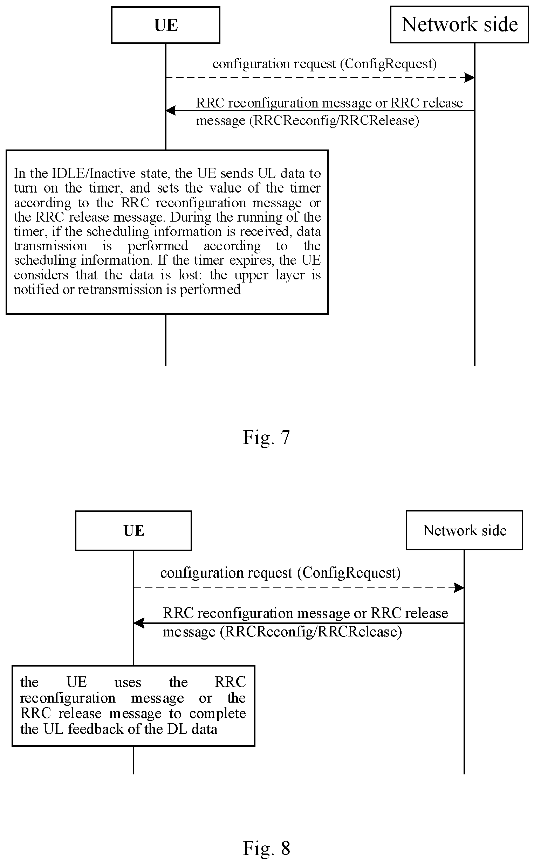

Embodiment 3: The network side configures the timer of the pre-configured resource. When the timer is turned on, the UE listens to the PDCCH to obtain the retransmission scheduling of the configured grant by the network side. The timer is turned on when the UE sends the configured grant data. Refer to FIG. 7.

Step 1: receiving the RRC release message, or the RRC reconfiguration message;

For example, the UE receives configuration information of the network side.

Optionally, the configuration information may include:

- the configured grant resource available to the UE in the Inactive state;
- timer information (Timerinfo), such as the timer size, the timer information is configured to set the value of the timer;
  Optionally, the size of the timer may be a multiple of the configured grant period.

Optionally, the size of the timer may be notified through dedicated signaling, such as an RRC release message or an RRC reconfiguration message, or may be notified by a broadcast message.

Optionally, before step 1, a configuration request is sent, for example, the UE sends a request message to request the network side to send configuration information;

Step 2: In the IDLE/Inactive state, the UE sends UL data to turn on the timer, and sets the value of the timer according to the RRC reconfiguration message or the RRC release message. During the running of the timer, if the scheduling information is received, data transmission is performed according to the scheduling information. If the timer expires, the UE considers that the data is lost: the upper layer is notified or retransmission is performed;

For example, step 21: when the UE is in the IDLE/Inactive state, the UE has UL data transmission, and after at least the following conditions are met, the UE can perform the process of sending data on the configured grant.

A. UL data is less than the first threshold;
B. UE maintains UL synchronization.

Step 22: The UE sends data on the preconfigured UL resource.

Optionally, when the UE is in the Inactive/IDLE state, after the UL data arrives, the UE triggers UL data transmission, and when the UE sends data on the configured grant resource, the UL data transmission is transmitted in the first HARQ process, and the timer is turned on;

When the timer runs, the UE listens to the retransmission scheduling of the first HARQ process by the network side, and the current HARQ process cannot be used to transmit data of other configured grant. After the timer expires, the UE considers that the data is lost, and the UE can: (1) notify the upper layer; or (2) perform data retransmission.

Embodiment 4: The network side configures PUCCH configuration information (PUCCH Config), which is configured to feedback whether the DL data transmission is successful for the UE in the Inactive state, refer to FIG. 8.

Step 1: receiving the RRC release message, or the RRC reconfiguration message;

Optionally, before step 1, a configuration request is sent, for example, the UE sends a request message to request the network side to send configuration information;

For example, the PUCCH configuration information (PUCCH Config) is received through an RRC reconfiguration message or an RRC release message.

Optionally, the PUCCH configuration information may include: resource position information of the PUCCH channel.

Optionally, the resource position information of the PUCCH channel includes one or more of: the start position of the frequency domain, the PUCCH resource block size, and the format information used by the PUCCH.

Further, the resource position information of the PUCCH channel further includes: UE time offset (K0ffset), where the UE time offset indicates that the UE feeds back the time offset of the PUCCH after receiving the PDCCH or PDSCH. For example, when the UE receives the PDCCH/PDSCH in a time slot n, the UE feeds back the PUCCH in a time slot (n+K0ffset).

Step 2: The UE uses the RRC reconfiguration message or the RRC release message to complete the UL feedback of the DL data, for example, the UE triggers data transmission in the Inactive state.

Optionally, the data transmission process may be a UL data sending process, including: an EDT process and a configured grant process, which are not limited here.

Method 1: EDT process.

(1) UE sends preamble;
(2) The UE uses the common search space to receive RAR;
(3) The UE sends Msg3 on the UL grant sent by the RAR, and carries the first UL indication, where the first UL indication is configured to indicate that the UE has also uplink data;
(4) The network side sends the first DL scheduling information, and/or the retransmission scheduling of the second DL scheduling to the UE;

The UE uses the PUCCH configuration information to feed back to the network side whether the first DL scheduling information and/or the retransmission scheduling of the second DL scheduling are successfully received.

The UE judges when the UE feeds back the PUCCH according to the time offset K0ffset of the PUCCH fed back by the UE. For example, the current time when the UE receives the PDCCH/PDSCH is a time slot n, then the time slot when the UE feeds back the PUCCH is n+K0ffset.

Method 2: configured grant process.

(1) In the inactive state, when the UE meets the following conditions, the process of sending data on the configured grant is triggered:

A. UL data is less than the first threshold
B. UE maintains UL synchronization;
C. configured grant UL resource is valid;
D. the current serving cell supports configured grant data sending.

(2) The UE sends data on the configured grant resource.
(3) The network side sends the first DL scheduling information and/or the retransmission scheduling of the second DL scheduling to the UE;

The UE uses the PUCCH configuration information to feed back to the network side whether the first DL scheduling information, and/or the retransmission scheduling of the second DL scheduling are successfully received, where the first DL and the second DL may be the same DL, or a different DL.
The UE uses the PDCCH information to listen to the retransmission schedule sent by the network side.
Embodiment 5: resource effective time.
After the UE receives the configuration information, the effective time condition may be any of the following:

(1) UE enters the IDLE state/Inactive state;
(2) a time offset is included in the configuration information, and the configuration information can take effect after receiving the configuration information time +the time offset;
(3) an absolute time is included in the configuration information, after the UE receives the configuration information, the configuration information takes effect after the absolute time;
(4) the configuration information includes the absolute time and the time offset, and after the UE receives the configuration information, the configuration information takes effect after the absolute time + the time offset;

Optionally, the expiration time condition of configuration information may be any of the following:

(1) the first timer expires, the first timer is turned on after the UE receives the configuration information, and optionally, the size of the first timer is also notified by the RRC release message;
(2) the first count value is greater than or equal to the preset value. The first count value indicates that after the UE receives the RRC release message, it is set to 0. When there is no UL data sent by a configured grant resource, the first count value is increased by one, and when the first count value reaches the maximum value, optionally, the maximum value is notified by the RRC release message;
(3) after TA is out-of-sync;
(4) the channel quality of the SSB resource is lower than the first threshold;
(5) the channel quality of the serving cell is lower than the second threshold;

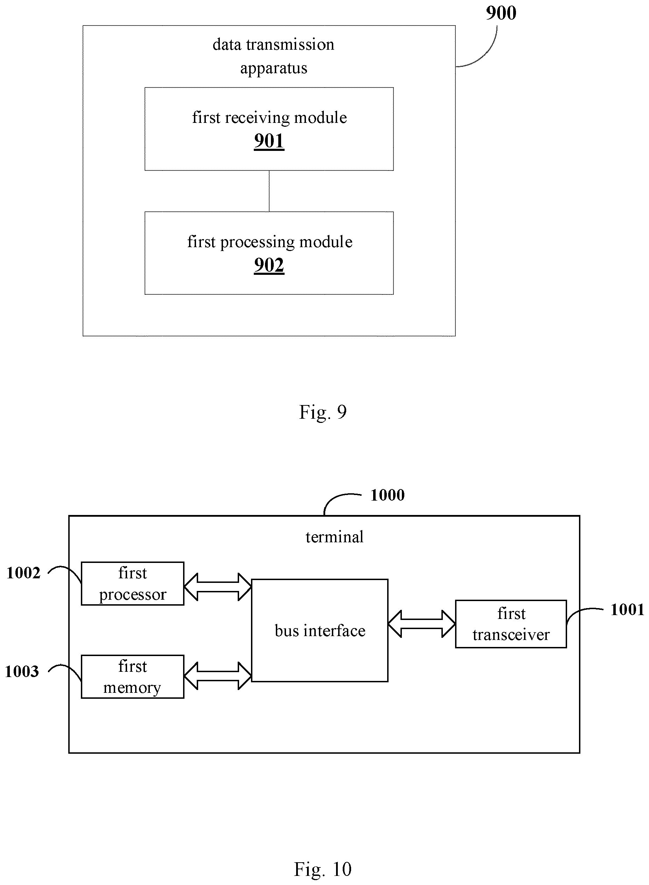

Referring to FIG. 9 , an embodiment of the present disclosure provides a data transmission apparatus, which is applied to a terminal, and the data transmission apparatus 900 includes:

a first receiving module 901, configured to receive configuration information sent by the network side;
a first processing module 902, configured to perform data sending and/or receiving in an IDLE state and/or Inactive state according to the configuration information in case that the terminal performs a preconfigured uplink data transmission or an early data transmission.

For example, the first receiving module 901 is configured to receive the configuration information sent by the network side when the terminal is in a connected state, or when the terminal is in an RRC IDLE state, or when the terminal is in an Inactive state.
Optionally, the configuration information is an RRC release message or an RRC reconfiguration message or a broadcast message.
Optionally, the configuration information includes: physical downlink control channel configuration information.
Optionally, the physical control channel configuration information is configured to receive scheduling information for scheduling uplink or downlink data of the terminal.
Optionally, the physical downlink control channel configuration information includes one or more of:

time domain information;

frequency domain information;
control resource set information; and
search space information.

Optionally, the time domain information includes: the symbol length occupied by the physical downlink control channel.

Optionally, the frequency domain information includes one or more of: a frequency domain start position of the physical downlink control channel, a frequency domain length of the physical downlink control channel, and frequency hopping information.

Optionally, the search space information includes one or more of: a period of the search space, a position of a start symbol of the physical downlink control channel in a time slot, a downlink control information format, and a control channel element aggregation level.

Optionally, the configuration information includes: HARQ process ID information, where the HARQ process ID information includes: a HARQ process number and/or a HARQ process ID resource pool, where the HARQ process ID resource pool includes the HARQ process ID;

The data transmission apparatus 900 also includes:

a second processing module, configured to calculate or select the HARQ process ID according to the HARQ process ID information.

Optionally, the data transmission apparatus 900 further includes:

a third processing module, configured to send uplink data, on the configured grant resource, according to the calculated or selected HARQ process ID.

Optionally, the HARQ process ID is carried in the uplink data.

Optionally, the configuration information includes: physical uplink control channel configuration information;

Optionally, the data transmission apparatus 900 further includes:

a fourth processing module, configured to perform uplink feedback of downlink data according to the physical uplink control channel configuration information.

Optionally, the physical uplink control channel configuration information includes: a first time offset, after the terminal receives the physical downlink control channel or the physical downlink shared channel, the terminal performs feedback on the physical uplink control channel after the first time offset elapses.

Optionally, the effective time condition of the configuration information includes one or more of the following combinations:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of the following combinations:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;
a channel quality of a synchronization signal block resource is lower than a first threshold value; and
a channel quality of a serving cell is lower than a second threshold value.

Optionally, the configuration information also includes: information of the first timer.

Optionally, the data transmission apparatus 900 further includes:

the fourth processing module, configured to notify a loss of upper data, or perform data retransmission, in case that the first timer expires.

The data transmission apparatus provided in the embodiments of the present disclosure can perform the method embodiment shown in FIG. 3 above, and the implementation principle and technical effect thereof are similar, which are not described herein again in this embodiment.

Referring to FIG. 10 , an embodiment of the present disclosure provides a terminal, and the terminal 1000 includes: a first transceiver 1001, a first processor 1002, and a first memory 1003;

the first transceiver 1001 sends and receives data under a control of the first processor 1002;
the first processor 1002 is configured to read program in the first memory 1003 to perform: receiving the configuration information sent by a network side; and performing data sending and/or receiving in an IDLE state and/or an Inactive state, according to the configuration information, in case that the terminal performs a preconfigured uplink data transmission or an early data transmission.

Optionally, the first processor 1002 is configured to read program in the first memory 1003 to perform: the terminal is in a connected state, or the terminal is in a RRC IDLE state, or the terminal receives configuration information sent by the network side in an Inactive state.

Optionally, the configuration information is an RRC release message or an RRC reconfiguration message or a broadcast message.

Optionally, the configuration information includes: physical downlink control channel configuration information.

Optionally, the physical control channel configuration information is configured to receive scheduling information for scheduling uplink or downlink data of the terminal.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the search space information includes one or more of: a period of the search space, a position of a start symbol of the physical downlink control channel in a time slot, a downlink control information format, and a control channel element aggregation level.

Optionally, the configuration information includes: HARQ process ID information, the HARQ process ID information includes: a HARQ process number and/or a HARQ process ID resource pool, where the HARQ process ID resource pool includes a HARQ process ID; and
the first processor 1002 is configured to read program in the first memory 1003 to perform: calculating or selecting the HARQ process ID, according to the HARQ process ID information.

Optionally, the first processor 1002 is configured to read program in the memory to perform: sending an uplink data, on a configured grant resource, according to the calculated or selected HARQ process ID.

Optionally, the HARQ process ID is carried in the uplink data.

Optionally, the RRC release message or the RRC reconfiguration message further includes: physical uplink control channel configuration information;

Optionally, the first processor 1002 is configured to read program in the first memory 1003 to perform: performing uplink feedback of downlink data, according to the physical uplink control channel configuration information.

Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;
a channel quality of a synchronization signal block resource is lower than a first threshold value; and
a channel quality of a serving cell is lower than a second threshold value.

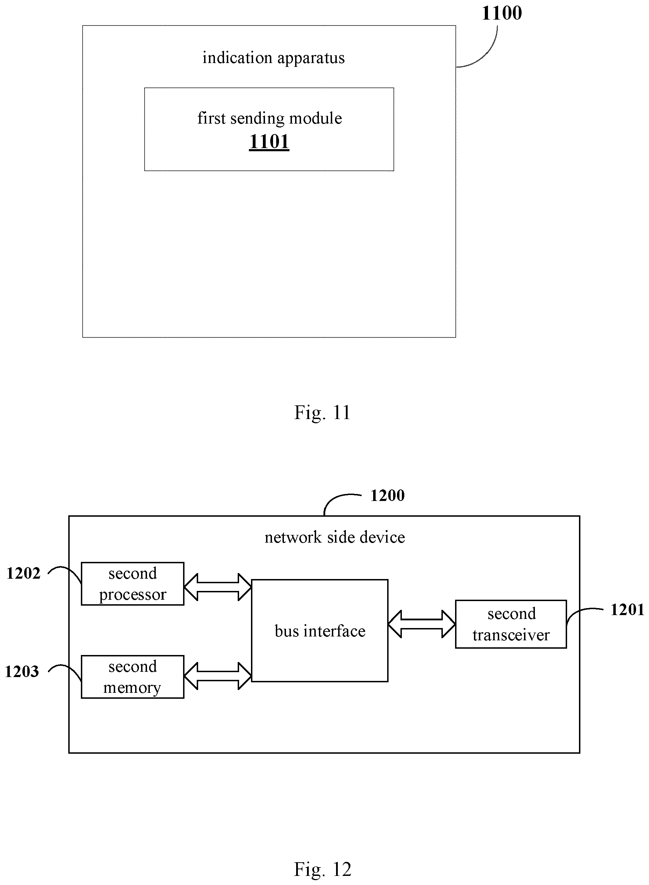

Optionally, the configuration information further includes: information of the first timer.
Optionally, the first processor 1002 is configured to read program in the first memory 1003 to perform the following operations: notifying a loss of upper data, or performing data retransmission, in case that the first timer expires.
The terminal provided by the embodiments of the present disclosure can perform the above-mentioned method embodiment shown in FIG. 3, and the implementation principle and technical effect thereof are similar, which are not described herein again in this embodiment.
Referring to FIG. 11, an embodiment of the present disclosure provides an indication apparatus, which is applied to a network side device, where the apparatus 1100 includes:
a first sending module 1101, configured to send configuration information to a terminal, where the configuration information is configured to enable the terminal to perform data sending and/or receiving in an IDLE state and/or an Inactive state, in case that the terminal performs a preconfigured uplink data transmission or an early data transmission.
For example, the first sending module 1101, configured to send configuration information to a terminal in a connected state or an RRC IDLE state or an Inactive state.
Optionally, the configuration information is an RRC release message or an RRC reconfiguration message or a broadcast message.
Optionally, the configuration information includes: physical downlink control channel configuration information.
Optionally, the physical control channel configuration information is configured to receive scheduling information for scheduling uplink or downlink data of the terminal.
Optionally, the physical downlink control channel configuration information includes one or more of:

time domain information;
frequency domain information;
control resource set information; and
search space information.

Optionally, the time domain information includes: a symbol length occupied by a physical downlink control channel.
Optionally, the frequency domain information includes one or more of: a frequency domain start position of the physical downlink control channel, a frequency domain length of the physical downlink control channel, and frequency hopping information.
Optionally, the search space information includes one or more of: a period of the search space, a position of a start symbol of the physical downlink control channel in a time slot, a downlink control information format, and a control channel element aggregation level.
Optionally, the configuration information includes: HARQ process ID information, the HARQ process ID information includes: a HARQ process number and/or a HARQ process ID resource pool, where the HARQ process ID resource pool includes a HARQ process ID.
Optionally, the configuration information includes: physical uplink control channel configuration information.
Optionally, the physical uplink control channel configuration information includes: a first time offset, the terminal performs a feedback on a physical uplink control channel after the first time offset elapses, after receiving a physical downlink control channel or a physical downlink shared channel.
Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;
a channel quality of a synchronization signal block resource is lower than a first threshold value; and
a channel quality of a serving cell is lower than a second threshold value.

Optionally, the configuration information also includes: information of the first timer.
The indication apparatus provided by the embodiments of the present disclosure can perform the above-mentioned method embodiment shown in FIG. 4, and the implementation principle and technical effect thereof are similar, which are not described herein again in this embodiment.
Referring to FIG. 12, an embodiment of the present disclosure provides a network side device, where the network side device 1200 includes: a second transceiver 1201 , a second processor 1202 , and a second memory 1203;

the second transceiver 1201 sends and receives data under a control of the second processor 1202;
the second processor 1202 is configured to read program in the second memory 1203 to perform: sending configuration information to a terminal, where the configuration information is configured to enable the terminal to perform data sending and/or receiving in an IDLE state and/or an Inactive state, in case that the terminal performs a pre-configured uplink data transmission or an early data transmission.

For example, the second processor 1202 is configured to read program in the second memory 1203 to perform: sending configuration information to a terminal in a connected state or a RRC IDLE state or an Inactive state.
Optionally, the configuration information is an RRC release message or an RRC reconfiguration message or a broadcast message.
Optionally, the configuration information includes: physical downlink control channel configuration information.
Optionally, the physical control channel configuration information is configured to receive scheduling information for scheduling uplink or downlink data of the terminal.
Optionally, the physical downlink control channel configuration information includes one or more of:

time domain information;
frequency domain information;
control resource set information; and
search space information.

Optionally, the time domain information includes: a symbol length occupied by a physical downlink control channel.
Optionally, the frequency domain information includes one or more of: a frequency domain start position of the physical downlink control channel, a frequency domain length of the physical downlink control channel, and frequency hopping information.
Optionally, the search space information includes one or more of: a period of the search space, a position of a start symbol of the physical downlink control channel in a time slot, a downlink control information format, and a control channel element aggregation level.
Optionally, the configuration information includes: HARQ process ID information, the HARQ process ID information includes: a HARQ process number and/or a HARQ process ID resource pool, where the HARQ process ID resource pool includes a HARQ process ID.
Optionally, the configuration information includes: physical uplink control channel configuration information.
Optionally, the physical uplink control channel configuration information includes: a first time offset, the terminal performs a feedback on a physical uplink control channel after the first time offset elapses, after receiving a physical downlink control channel or a physical downlink shared channel.

Optionally, an effective time condition of the configuration information includes one or more of:

the terminal enters the IDLE state or Inactive state;
a second time offset elapses after receiving the configuration information, where the second time offset is carried in the configuration information;
a first absolute time elapses after receiving the configuration information, where the first absolute time is carried in the configuration information; and
a third time offset and a second absolute time elapse after receiving the configuration information, where the second absolute time and the third time offset are carried in the configuration information.

Optionally, an expiration time condition of the configuration information includes one or more of:

a first timer expires, where the first timer is started after the terminal receives the configuration information, and when the first timer is started, the terminal listens to the physical downlink control channel to obtain retransmission scheduling of configured grant by the network side;
a first count value is greater than or equal to a preset value, and the first count value indicates that after the terminal receives the RRC release message, when there is no uplink data sent by a configured grant resource, the first count value is increased by one;
timing advance is out-of-sync;
a channel quality of a synchronization signal block resource is lower than a first threshold value; and
a channel quality of a serving cell is lower than a second threshold value.

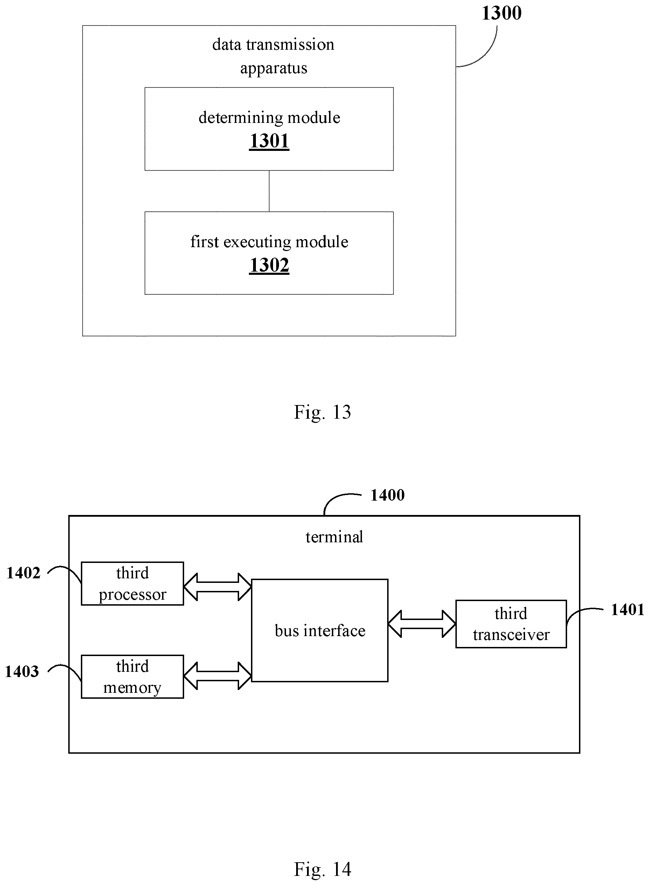

Optionally, the configured information further includes: information of the first timer.
The network side device provided by the embodiments of the present disclosure can perform the above-mentioned method embodiment shown in FIG. 4, and the implementation principle and technical effect thereof are similar, which are not described herein again in this embodiment.
Referring to FIG. 13, an embodiment of the present disclosure provides a data transmission apparatus, which is applied to a terminal, where the data transmission apparatus 1300 includes:

a determining module 1301, configured to determine to perform preconfigured uplink UL resource data transmission PUR or early data transmission EDT;
a first executing module 1302, configured to perform data sending and/or receiving in an IDLE state and/or an Inactive state, according to the configuration information,
where the configuration information is obtained by the terminal from the network side in a connected state.

Optionally, the configuration information includes: physical downlink control channel configuration information.
Optionally, the physical downlink control channel configuration information includes one or more of:

time domain information;
frequency domain information;
control resource set information; and
search space information.

Optionally, the time domain information includes: a symbol length occupied by a physical downlink control channel.
Optionally, the frequency domain information includes one or more of: a frequency domain start position of the physical downlink control channel, a frequency domain length of the physical downlink control channel, and frequency hopping information.
Optionally, the configuration information includes: Hybrid Automatic Repeat Request (HARQ) process identification (ID) information, the HARQ process ID information includes: a HARQ process number and/or a HARQ process ID;

the data transmission apparatus 1300 further includes:
the second executing module, configured to calculate or select the HARQ process ID according to the HARQ process ID information.

Optionally, the data transmission apparatus 1300 further includes:
a sending module, configured to send an uplink data, on a configured grant resource, according to the calculated or selected HARQ process ID.

Optionally, the data transmission apparatus 1300 further includes:
a third executing module, configured to perform uplink feedback of downlink data, according to the physical uplink control channel configuration information.

Optionally, the physical uplink control channel configuration information further includes: a first time offset; the data transmission apparatus 1300 further includes:
a feedback module, configured to perform, after receiving the physical downlink control channel or a physical downlink shared channel, feedback on the physical uplink control channel after the first time offset elapses.

The data transmission apparatus provided by the embodiments of the present disclosure can perform the above-mentioned method embodiment shown in FIG. 3, and the implementation principle and technical effect thereof are similar, which are not described herein again in this embodiment.

Referring to FIG. 14, an embodiment of the present disclosure provides a terminal, and the terminal 1400 includes: a third transceiver 1401, a third processor 1402, and a third memory 1403;

the third transceiver 1401 sends and receives data under a control of the third processor 1402;
the third processor 1402 is configured to read program in the third memory 1403 to perform: determining to perform preconfigured uplink UL resource data transmission PUR or early data transmission EDT;
performing data sending and/or receiving in an IDLE state and/or an Inactive state, according to the configuration information,
where the configuration information is obtained by the terminal in a connected state from a network side.

Optionally, the configuration information includes: physical downlink control channel configuration information.

Optionally, the physical downlink control channel configuration information includes one or more of:

time domain information;
frequency domain information;
control resource set information; and
search space information.

Optionally, the time domain information includes: a symbol length occupied by a physical downlink control channel.

Optionally, the frequency domain information includes one or more of: a frequency domain start position of the physical downlink control channel, a frequency domain length of the physical downlink control channel, and frequency hopping information.

Optionally, the configuration information includes: Hybrid Automatic Repeat Request (HARQ) process identification (ID) information, the HARQ process ID information includes: a HARQ process number and/or a HARQ process ID; the third processor 1402 is configured to read program in the third memory 1403 to further perform the following operations: calculating or selecting the HARQ process ID, according to the HARQ process ID information.

Optionally, the third processor 1402 is configured to read program in the third memory 1403 to further perform: sending an uplink data, on a configured grant resource, according to the calculated or selected HARQ process ID.

Optionally, the third processor 1402 is configured to read program in the third memory 1403 to further perform: performing uplink feedback of downlink data, according to the physical uplink control channel configuration information.

Optionally, the physical uplink control channel configuration information further includes: a first time offset;

the third processor 1402 is configured to read program in the third memory 1403 to further perform:
performing, after receiving the physical downlink control channel or a physical downlink shared channel, feedback on the physical uplink control channel after the first time offset elapses.

The terminal provided by the embodiments of the present disclosure can perform the above-mentioned method embodiment shown in FIG. 3, and the implementation principle and technical effect thereof are similar, which are not described herein again in this embodiment.

An embodiment of the present disclosure further provides a readable storage medium, where a program or an instruction is stored on the readable storage medium, and when the program or instruction is executed by a processor, each process of the method embodiment shown in FIG. 3 or FIG. 4 is implemented, and the same technical effect can be achieved, in order to avoid repetition, details are not repeated here.

The steps of the method or algorithm described in conjunction with the disclosed content of the present disclosure may be implemented in a hardware manner, or may be implemented in a manner of a processor executing software instructions. The software instructions may be composed of corresponding software modules, and the software modules may be stored in RAM, flash memory, ROM, EPROM, EEPROM, registers, hard disk, removable hard disk, CD-ROM, or any other form of storage medium known in the art. An exemplary storage medium is coupled to the processor, such that the processor can read information from, and write information to, the storage medium. Of course, the storage medium can also be an integral part of the processor. The processor and storage medium may be located in an ASIC. In addition, the ASIC may be located in a core network interface device. Of course, the processor and the storage medium may also exist in the core network interface device as discrete components.

Those skilled in the art should appreciate that, in one or more of the above-mentioned examples, the functions described in the present disclosure may be implemented in hardware, software, firmware, or any combination thereof. When implemented in software, the functions may be stored in or transmitted over as one or more instructions or code in a computer-readable media. The computer-readable media includes computer storage media and communication media, where the communication media includes any media that facilitates a computer program transferred from one place to another. A storage medium may be any available medium that can be accessed by a general purpose or special purpose computer.

The specific embodiments described above further describe the purpose, technical solutions and beneficial effects of the present disclosure in detail. It should be understood that the above descriptions are only specific embodiments of the present disclosure, and are not intended to limit the protection scope of the present disclosure. Any modifications, equivalent replacements, improvements, etc. made on the basis of the technical solutions of the present disclosure shall be included within the protection scope of the present disclosure.

Those skilled in the art should understand that, embodiments of the present disclosure may be provided as a method, system, or computer program product. Therefore, embodiments of the present disclosure may be the forms of an entire hardware embodiment, an entire software embodiment, or an embodiment combining software and hardware aspects. Furthermore, embodiments of the present disclosure may be the form of a computer program product implemented on one or more computer-usable storage media(including but not limited to disk storage, CD-ROM, optical storage, etc.) having computer-usable program code therein.

Embodiments of the present disclosure are described with reference to flowcharts and/or block diagrams of methods, devices (systems), and computer program products according to embodiments of the present disclosure. It will be understood that each flow and/or block in the flowcharts and/or block diagrams, and combinations of flows and/or blocks in the flowcharts and/or block diagrams, can be implemented by computer program instructions. These computer program instructions may be provided to a processor of a general purpose computer, special purpose computer, embedded processor or other programmable data processing device to produce a machine, so that instructions executed by the processor of a computer or other programmable data processing device produces an apparatus for implementing the functions specified in a flow or flows of the flowcharts and/or a block or blocks of the block diagrams.

These computer program instructions may also be stored in a computer-readable memory capable of directing a computer or other programmable data processing device to work in a particular manner, so that the instructions stored in the computer-readable memory generate an article of manufacture including instruction apparatus, the instruction apparatus implements the functions specified in a flow or flows of the flowchart and/or a block or blocks of the block diagram.

These computer program instructions can also be loaded on a computer or other programmable data processing device to cause a series of operational steps performed on the computer or other programmable device to produce a computer-implemented process, so that the instructions executed on a computer or other programmable device provide steps for implementing the functions specified in a flow or flows of the flowcharts and/or a block or blocks of the block diagrams.

It should be noted that it should be understood that the division of the above respective modules is only a division of logical functions, and in actual implementation, all or part of them may be integrated into a physical entity, or may be physically separated. And these modules can all be implemented in the form of software calling through processing elements; they can also all be implemented in hardware; some modules can also be implemented in the form of calling software through processing elements, and some modules can be implemented in hardware. For example, the determining module may be a separately provided processing element, or may be implemented by integrating into a certain chip of the above-mentioned apparatus, in addition, it may also be stored in the memory of the above-mentioned apparatus in the form of program code, and a certain processing element of the above-mentioned apparatus can call and execute the function of the above determining module. The implementation of other modules is similar to this. In addition, all or part of these modules can be integrated together, and can also be implemented independently. The processing element described here may be an integrated circuit with signal processing capability. In the implementation process, each step of the above-mentioned methods or each of the above-mentioned modules can be completed by an integrated logic circuit of hardware in the processor element or an instruction in the form of software.

For example, each module, unit, sub-unit or sub-module may be one or more integrated circuits configured to implement the above method, such as: one or more Application Specific Integrated Circuits (ASIC), or, one or more digital signal processors (DSP), or, one or more Field Programmable Gate Arrays (FPGA), etc. For another example, when one of the above modules is implemented in the form of a scheduler code of a processing element, the processing element may be a general-purpose processor, such as a central processing unit (Central Processing Unit, CPU) or other processors that can invoke program codes. For another example, these modules can be integrated together and implemented in the form of a system-on-$\alpha$-chip (SOC).

The terms "first", "second", etc. in the description and claims of the present disclosure are used to distinguish similar objects, and are not necessarily used to describe a specific order or sequence. It is to be understood that the data so used can be interchanged under appropriate circumstances such that the embodiments of the present disclosure described herein are implemented in sequences other than those illustrated or described herein, for example. Furthermore, the terms "including" and "having" and any variations thereof, are intended to cover non-exclusive inclusion, for example, a process, method, system, product or device including a series of steps or units are not necessarily limited to those steps or units expressly listed, rather, other steps or units not expressly listed or inherent to the process, method, product or device may be included. In addition, the use of "and/or" in the specification and the claims means at least one of the linked objects, such as A and/or B and/or C, is meant to include A alone, B alone, C alone, and both A and B exist, both B and C exist, A and C both exist, and 7 cases where A, B, and C all exist. Similarly, the use of "at least one of A and B" in this specification and in the claims should be understood as "A alone, B alone, or both A and B exist."

Obviously, those skilled in the art can make various changes and modifications to the embodiments of the present disclosure without departing from the spirit and scope of the present disclosure. Thus, provided that these modifications and variations of the embodiments of the present disclosure fall within the scope of the claims of the present disclosure and their equivalents, the present disclosure is also intended to cover such modifications and variations.

**Claims**

1. A data transmission method, applied to a terminal, comprising:

    receiving configuration information sent by a network side; and
    performing a data sending and/or a data receiving in an IDLE state and/or an Inactive state, according to the configuration information, in case that the terminal performs a preconfigured uplink data transmission or an early data transmission.

2. The method according to claim 1, wherein the configuration information is a Radio Resource Control (RRC) release message or an RRC reconfiguration message or a broadcast message.

3. The method according to claim 2, wherein the configuration information comprises physical downlink control channel configuration information.

4. The method according to claim 3, wherein the physical control channel configuration information is configured to receive scheduling information for scheduling uplink or downlink data of the terminal.

5. The method according to claim 3, wherein the physical downlink control channel configuration information comprises one or more of:

    time domain information;
    frequency domain information;
    control resource set information; or
    search space information.

6. The method according to claim 5, wherein the time domain information comprises a symbol length occupied by a physical downlink control channel.

7. The method according to claim 5, wherein the frequency domain information comprises one or more of: a frequency domain start position of a physical downlink control channel, a frequency domain length of a physical downlink control channel, or frequency hopping information.

8. The method according to claim 5, wherein the search space information comprises one or more of: a period of a search space, a position of a start symbol of a physical downlink control channel in a time slot, a downlink control information format, or a control channel element aggregation level.

9. The method according to claim 1, wherein the configuration information comprises Hybrid Automatic Repeat Request (HARQ) process identification (ID) information, the HARQ process ID information comprises a HARQ process number and/or a HARQ process ID;
the method further comprises:
calculating or selecting the HARQ process ID, according to the HARQ process ID information.

10. The method according to claim 9, further comprising:
sending an uplink data, on a configured grant resource, according to the calculated or selected HARQ process ID.

11. The method according to claim 10, wherein the HARQ process ID is carried in the uplink data.

12. The method according to claim 1, wherein the configuration information comprises physical uplink control channel configuration information;
the method further comprises:
performing an uplink feedback of downlink data, according to the physical uplink control channel configuration information.

13. The method according to claim 12, wherein the physical uplink control channel configuration information comprises a first time offset;
the terminal performs a feedback on a physical uplink control channel after the first time offset elapses, after receiving a physical downlink control channel or a physical downlink shared channel.

14. The method according to claim 1, wherein an effective time condition of the configuration information comprises one or more of:

the terminal enters the IDLE state or Inactive state;
a second time offset elapses after receiving the configuration information, wherein the second time offset is carried in the configuration information;
a first absolute time elapses after receiving the configuration information, wherein the first absolute time is carried in the configuration information; or
a third time offset and a second absolute time elapse after receiving the configuration information, wherein the second absolute time and the third time offset are carried in the configuration information.

15. The method according to claim 1, wherein an expiration time condition of the configuration information comprises one or more of:

a first timer expires, wherein the first timer is started after the terminal receives the configuration information, and when the first timer is started, the terminal listens to a physical downlink control channel to obtain a retransmission scheduling of configured grant by the network side;
a first count value is greater than or equal to a preset value, and the first count value indicates that after the terminal receives an RRC release message, when there is no uplink data sent by a configured grant resource, the first count value is increased by one;
a timing advance is out-of-sync;
a channel quality of a synchronization signal block resource is lower than a first threshold value; or
a channel quality of a serving cell is lower than a second threshold value.

16. The method according to claim 15, wherein the configuration information comprises: information of the first timer.

17. The method according to claim 15, further comprising:
notifying a loss of upper data, or performing a data retransmission, in case that the first timer expires.

18. A data transmission method, applied to a terminal, comprising:

determining to perform a preconfigured uplink resource (PUR) data transmission or an early data transmission EDT;
performing a data sending and/or a data receiving in an IDLE state and/or an Inactive state, according to configuration information,
wherein the configuration information is obtained by the terminal in a connected state from a network side.

19. The method according to claim 18, wherein the configuration information comprises: physical downlink control channel configuration information.

20. The method according to claim 19, wherein the physical downlink control channel configuration information comprises one or more of:

   time domain information;
   frequency domain information;
   control resource set information; or
   search space information.

21. The method according to claim 20, wherein the time domain information comprises a symbol length occupied by a physical downlink control channel.

22. The method according to claim 20, wherein the frequency domain information comprises one or more of: a frequency domain start position of a physical downlink control channel, a frequency domain length of a physical downlink control channel, or frequency hopping information.

23. The method according to claim 18, wherein the configuration information comprises Hybrid Automatic Repeat Request (HARQ) process identification (ID) information, the HARQ process ID information comprises: a HARQ process number and/or a HARQ process ID;
   prior to the performing the data sending and/or the data receiving in the IDLE state and/or the Inactive state, the method further comprises:
   calculating or selecting the HARQ process ID, according to the HARQ process ID information.

24. The method according to claim 23, further comprising:
   sending an uplink data, on a configured grant resource, according to the calculated or selected HARQ process ID.

25. The method according to claim 19, further comprising:
   performing an uplink feedback of downlink data, according to the physical uplink control channel configuration information.

26. The method according to claim 19, wherein the physical uplink control channel configuration information further comprises: a first time offset;
   the method further comprises:
   performing by the terminal, after receiving a physical downlink control channel or a physical downlink shared channel, a feedback on a physical uplink control channel after the first time offset elapses.

27. An indication method, applied to a network side device, comprising:
   sending configuration information to a terminal, wherein the configuration information is configured to enable the terminal to perform data sending and/or receiving in an IDLE state and/or an Inactive state, in case that the terminal performs a preconfigured uplink data transmission or an early data transmission.

28. The method according to claim 27, wherein the configuration information is a Radio Resource Control (RRC) release message or an RRC reconfiguration message or a broadcast message.

29. The method according to claim 27, wherein the configuration information comprises: physical downlink control channel configuration information.

30. The method according to claim 29, wherein the physical control channel configuration information is configured to receive scheduling information for scheduling uplink or downlink data of the terminal.

31. The method according to claim 29, wherein the physical downlink control channel configuration information comprises one or more of:

   time domain information;
   frequency domain information;
   control resource set information; or

search space information.

32. The method according to claim 31, wherein the time domain information comprises: a symbol length occupied by a physical downlink control channel.

33. The method according to claim 31, wherein the frequency domain information comprises one or more of: a frequency domain start position of the physical downlink control channel, a frequency domain length of the physical downlink control channel, or frequency hopping information.

34. The method according to claim 31, wherein the search space information comprises one or more of: a period of the search space, a position of a start symbol of a physical downlink control channel in a time slot, a downlink control information format, or a control channel element aggregation level.

35. The method according to claim 27, wherein the configuration information comprises HARQ process ID information, the HARQ process ID information comprises a HARQ process number and/or a HARQ process ID resource pool, wherein the HARQ process ID resource pool comprises a HARQ process ID.

36. The method according to claim 27, wherein the configuration information comprises physical uplink control channel configuration information.

37. The method according to claim 36, wherein the physical uplink control channel configuration information comprises: a first time offset,
the terminal performs a feedback on a physical uplink control channel after the first time offset elapses, after receiving a physical downlink control channel or a physical downlink shared channel.

38. The method according to claim 27, wherein an effective time condition of the configuration information comprises one or more of:

the terminal enters the IDLE state or Inactive state;
a second time offset elapses after receiving the configuration information, wherein the second time offset is carried in the configuration information;
a first absolute time elapses after receiving the configuration information, wherein the first absolute time is carried in the configuration information; or
a third time offset and a second absolute time elapse after receiving the configuration information, wherein the second absolute time and the third time offset are carried in the configuration information.

39. The method according to claim 27, wherein an expiration time condition of the configuration information comprises one or more of

a first timer expires, wherein the first timer is started after the terminal receives the configuration information, and when the first timer is started, the terminal listens to a physical downlink control channel to obtain a retransmission scheduling of configured grant by the network side;
a first count value is greater than or equal to a preset value, and the first count value indicates that after the terminal receives an RRC release message, when there is no uplink data sent by a configured grant resource, the first count value is increased by one;
a timing advance is out-of-sync;
a channel quality of a synchronization signal block resource is lower than a first threshold value; or
a channel quality of a serving cell is lower than a second threshold value.

40. The method according to claim 39, wherein the configuration information comprises: information of the first timer.

41. A data transmission apparatus, applied to a terminal, comprising:

a first receiving module, configured to receive configuration information sent by a network side;
a first processing module, configured to perform a data sending and/or a data receiving in an IDLE state and/or an Inactive state, according to the configuration information, in case that the terminal performs a preconfigured uplink data transmission or an early data transmission.

**42.** The apparatus according to claim 41, wherein the configuration information comprises HARQ process ID information, the HARQ process ID information comprises a HARQ process number and/or a HARQ process ID resource pool, wherein the HARQ process ID resource pool comprises the HARQ process ID;
the apparatus further comprises:
a second processing module, configured to calculate or select the HARQ process ID, according to the HARQ process ID information.

**43.** The apparatus according to claim 41, wherein the configuration information comprises physical uplink control channel configuration information;
the apparatus further comprises:
a fourth processing module, configured to perform an uplink feedback of downlink data, according to the physical uplink control channel configuration information.

**44.** A terminal, comprising: a first transceiver, a first processor and a first memory, wherein

the first transceiver is configured to send and receive data under a control of the first processor;
the first processor is configured to read a program in the first memory to perform: receiving configuration information sent by a network side; and performing a data sending and/or a data receiving in an IDLE state and/or an Inactive state, according to the configuration information, in case that the terminal performs a preconfigured uplink data transmission or an early data transmission.

**45.** The terminal according to claim 44, wherein the first processor is configured to read the program in the first memory to perform: receiving the configuration information sent by the network side in case that the terminal is in a connected state, or the terminal is in a Radio Resource Control (RRC) IDLE state, or the terminal is in an Inactive state.

**46.** The terminal according to claim 44, wherein the configuration information comprises: Hybrid Automatic Repeat Request (HARQ) process identification (ID) information, the HARQ process ID information comprises: a HARQ process number and/or a HARQ process ID resource pool, wherein the HARQ process ID resource pool comprises the HARQ process ID;
the first processor is configured to read the program in the first memory to perform: calculating or selecting the HARQ process ID, according to the HARQ process ID information.

**47.** The terminal according to claim 44, wherein the first processor is configured to read the program in the first memory to perform: sending an uplink data, on a configured grant resource, according to the calculated or selected HARQ process ID.

**48.** The terminal according to claim 44, wherein the RRC release message or the RRC reconfiguration message further comprises physical uplink control channel configuration information;
the first processor is configured to read the program in the first memory to perform: performing an uplink feedback of downlink data, according to the physical uplink control channel configuration information.

**49.** A data transmission apparatus, applied to a terminal, comprising:

a determining module, configured to determine to perform a preconfigured uplink resource (PUR) data transmission or an early data transmission EDT;
a first executing module, configured to perform a data sending and/or a data receiving in an IDLE state and/or an Inactive state, according to the configuration information,
wherein the configuration information is obtained by the terminal in a connected state from the network side.

**50.** The data transmission apparatus according to claim 49, wherein the configuration information comprises: physical downlink control channel configuration information.

**51.** The data transmission apparatus according to claim 49, wherein the configuration information comprises: Hybrid Automatic Repeat Request (HARQ) process identification (ID) information, the HARQ process ID information comprises: a HARQ process number and/or a HARQ process ID;
the data transmission apparatus further comprises:
a second executing module, configured to calculate or select the HARQ process ID, according to the HARQ process ID information.

**52.** The data transmission apparatus according to claim 51, further comprising:
a sending module, configured to send an uplink data, on a configured grant resource, according to the calculated or selected HARQ process ID.

**53.** The data transmission apparatus according to claim 50, further comprising:
a third executing module, configured to perform an uplink feedback of downlink data, according to the physical uplink control channel configuration information.

**54.** The data transmission apparatus according to claim 50, wherein the physical uplink control channel configuration information further comprises: a first time offset;
the data transmission apparatus further comprises:
a feedback module, configured to perform, after receiving a physical downlink control channel or a physical downlink shared channel, a feedback on a physical uplink control channel after the first time offset elapses.

**55.** A terminal, comprising: a third transceiver, a third processor and a third memory;

the third transceiver sends and receives data under a control of the third processor;
the third processor is configured to read a program in the third memory to perform: determining to perform a preconfigured uplink resource (PUR) data transmission or an early data transmission EDT;
performing a data sending and/or a data receiving in an IDLE state and/or an Inactive state, according to configuration information,
wherein the configuration information is obtained by the terminal in a connected state from a network side.

**56.** The terminal according to claim 55, wherein the configuration information comprises: physical downlink control channel configuration information.

**57.** The terminal according to claim 55, wherein the configuration information comprises: Hybrid Automatic Repeat Request (HARQ) process identification (ID) information, the HARQ process ID information comprises: a HARQ process number and/or a HARQ process ID;
the third processor is configured to read the program in the third memory to further perform:
calculating or selecting the HARQ process ID, according to the HARQ process ID information.

**58.** The terminal according to claim 57, wherein the third processor is configured to read the program in the third memory to further perform:
sending an uplink data, on a configured grant resource, according to the calculated or selected HARQ process ID.

**59.** The terminal according to claim 56, wherein the third processor is configured to read the program in the third memory to further perform:
performing an uplink feedback of downlink data, according to the physical uplink control channel configuration information.

**60.** The terminal according to claim 56, wherein the physical uplink control channel configuration information further comprises: a first time offset;
the third processor is configured to read the program in the third memory to further perform: performing, after receiving a physical downlink control channel or a physical downlink shared channel, a feedback on a physical uplink control channel after the first time offset elapses.

**61.** An indication apparatus, applied to a network side device, comprising:
a first sending module, configured to send configuration information to a terminal, wherein the configuration information is configured to enable the terminal to perform data sending and/or receiving in an IDLE state and/or an Inactive state, in case that the terminal performs a preconfigured uplink data transmission or an early data transmission.

**62.** A network side device, comprising: a second transceiver, a second processor and a second memory;

the second transceiver sends and receives data under a control of the second processor;
the second processor is configured to read program in the second memory to perform: sending configuration information to a terminal, wherein the configuration information is configured to enable the terminal to perform a data sending and/or a data receiving in an IDLE state and/or an Inactive state, in case that the terminal performs a preconfigured uplink data transmission or an early data transmission.

63. A readable storage medium, wherein a program is stored in the readable storage medium, the program is executed by the processor to perform the method according to any one of claims 1 to 40.

UE

eNB

**1. Random Access Preamble**

**2. Random Access Response**

**3. RRC Connection Resume Request**

**4. RRC Connection Release**

Fig. 1

| UE | eNB | MME or AMF | S-Gw or SMF/UPF |
|---|---|---|---|

**0.**the UE determines that there are available PUR resources

**1.** RRC early data request

**7a.** confirming acknowledgement through layer 1

**2-6** core network steps

**7b. MAC CE**

**7c.** RRC early data complete message

**8.** S1/AN release procedure

Fig. 2

**301**

receiving configuration information sent by a network side, when the terminal is in a connected state

**302**

performing data sending and/or receiving in an IDLE state and/ or an Inactive state， according to the configuration information，in case that the terminal performs a preconfigured uplink data transmission or an early data transmission

Fig. 3

**401**

sending configuration information to the terminal, the configuration information is configured to enable the terminal to perform data sending and/or receiving in the IDLE state and/or Inactive state, in case that the terminal performs a preconfigured uplink data transmission or an early data transmission

Fig. 4

```
    ┌──────────────┐                              ┌──────────────────┐
    │      UE      │                              │  Network side    │
    └──────┬───────┘                              └─────────┬────────┘
           │                                                │
           │   configuration request (ConfigRequest)        │
           ├ ─ ─ ─ ─ ─ ─ ─ ─ ─ ─ ─ ─ ─ ─ ─ ─ ─ ─ ─ ─ ─ ─ ─>│
           │                                                │
           │   RRC reconfiguration message or RRC           │
           │<──release message (RRCReconfig/────────────────┤
           │   RRCRelease)                                  │
    ┌──────┴────────────────────────┐                       │
    │ UE receives the PDCCH scheduling│                      │
    │ information in the IDLE/Inactive│                      │
    │ state                          │                       │
    └──────┬────────────────────────┘                       │
           │                                                │
```

Fig. 5

```
    ┌──────────────┐                              ┌──────────────────┐
    │      UE      │                              │  Network side    │
    └──────┬───────┘                              └─────────┬────────┘
           │   configuration request (ConfigRequest)        │
           ├ ─ ─ ─ ─ ─ ─ ─ ─ ─ ─ ─ ─ ─ ─ ─ ─ ─ ─ ─ ─ ─ ─ ─>│
           │                                                │
           │   RRC reconfiguration message or RRC           │
           │<──release message (RRCReconfig/────────────────┤
           │   RRCRelease)                                  │
    ┌──────┴─────────────────────────┐                      │
    │ In the IDLE/Inactive state, the UE│                   │
    │ uses the RRC reconfiguration    │                     │
    │ message or the RRC release      │                     │
    │ message to perform the UL data  │                     │
    │ sending process                 │                     │
    └──────┬─────────────────────────┘                      │
           │                                                │
```

Fig. 6

UE        Network side

configuration request (ConfigRequest)

RRC reconfiguration message or RRC release message (RRCReconfig/RRCRelease)

In the IDLE/Inactive state, the UE sends UL data to turn on the timer, and sets the value of the timer according to the RRC reconfiguration message or the RRC release message. During the running of the timer, if the scheduling information is received, data transmission is performed according to the scheduling information. If the timer expires, the UE considers that the data is lost: the upper layer is notified or retransmission is performed

Fig. 7

UE        Network side

configuration request (ConfigRequest)

RRC reconfiguration message or RRC release message (RRCReconfig/RRCRelease)

the UE uses the RRC reconfiguration message or the RRC release message to complete the UL feedback of the DL data

Fig. 8

900

data transmission
apparatus

first receiving module
**901**

first processing module
**902**

Fig. 9

1000

terminal

1002 — first
processor

bus interface

first
transceiver — 1001

1003 — first
memory

Fig. 10

**1100**

indication apparatus

first sending module
**1101**

Fig. 11

**1200**

network side device

1202 — second processor

1203 — second memory

bus interface

second transceiver — **1201**

Fig. 12

**1300**

data transmission
apparatus

determining module
**1301**

first executing module
**1302**

Fig. 13

**1400**

terminal

1402 — third
processor

1403 — third
memory

bus interface

third
transceiver — **1401**

Fig. 14

## INTERNATIONAL SEARCH REPORT

| | International application No. |
|---|---|
| | **PCT/CN2021/104010** |

**A. CLASSIFICATION OF SUBJECT MATTER**

H04W 24/02(2009.01)i; H04W 76/27(2018.01)i

According to International Patent Classification (IPC) or to both national classification and IPC

**B. FIELDS SEARCHED**

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 配置 空闲 连接 非激活 激活 睡眠 重配 小数据small data inactive configurat+ information IDLE RRC PUR EDT

**C. DOCUMENTS CONSIDERED TO BE RELEVANT**

| Category* | Citation of document, with indication, where appropriate, of the relevant passages | Relevant to claim No. |
|---|---|---|
| X | CN 110536471 A (ZTE CORPORATION) 03 December 2019 (2019-12-03) description paragraphs [0043]-[0335] | 1-63 |
| X | CN 110831197 A (BEIJING SAMSUNG TELECOM R&D CENTER et al.) 21 February 2020 (2020-02-21) description paragraphs [0046]-[0636] | 1-63 |
| A | LG ELECTRONICS. "Discussion on preconfigured UL resources in NB-IoT" *3GPP TSG RAN WG1 Meeting #95 R1-1812536*, 16 January 2018 (2018-01-16), entire document | 1-63 |
| A | ERICSSON. "PUR L1 or L2/L3 acknowledgement" *3GPP TSG-RAN WG2 #106 Tdoc R2-1906940 Revision of R2-1903830*, 17 May 2019 (2019-05-17), entire document | 1-63 |
| X | WO 2020032634 A2 (LG ELECTRONICS INC.) 13 February 2020 (2020-02-13) claims 1-20 | 1-63 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 September 2021** | **28 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/104010**

| Patent document cited in search report | | | Publication date (day/month/year) | Patent family member(s) | | | Publication date (day/month/year) |
|---|---|---|---|---|---|---|---|
| CN | 110536471 | A | 03 December 2019 | WO | 2020192504 | A1 | 01 October 2020 |
| CN | 110831197 | A | 21 February 2020 | EP | 3821676 | A1 | 19 May 2021 |
| | | | | KR | 20210030999 | A | 18 March 2021 |
| | | | | WO | 2020032659 | A1 | 13 February 2020 |
| WO | 2020032634 | A2 | 13 February 2020 | CN | 112567847 | A | 26 March 2021 |
| | | | | DE | 112019003526 | T5 | 06 May 2021 |

Form PCT/ISA/210 (patent family annex) (January 2015)

**EP 4 178 249 A1**

**Patent documents cited in the description**

- CN 202010635844